# EUROPEAN PATENT APPLICATION

(11) **EP 4 039 460 A1**
(43) Date of publication of application: **10.08.2022**
(21) Application number: 21156094.1
(22) Date of filing: 09.02.2021
(51) Int. Cl.: B32B 3/28, B32B 5/02, B32B 5/06, B32B 5/18, B32B 7/12, B32B 27/06, B32B 27/12, B32B 27/22, B32B 27/28, B32B 27/30, B32B 27/32, E04C 2/00

(54) **A ROOF ASSEMBLY HAVING IMPROVED HAIL IMPACT RESISTANCE**

(71) Applicant: Sika Technology AG, 6340 Baar (CH)
(72) Inventor: Jiang, Xiong, Canton, MA 02021 (US); De Leon, Carl, Brookline, MA 02446 (US); Whelan, Brian J., Canton, MA 02021 (US)
(74) Representative: Sika Patent Attorneys

(57) **Abstract**

The invention is directed to a roof assembly (1) comprising:
i. A roof deck (2),
ii. A roof underlayment (3),
iii. A roofing membrane (4) having an upper and a lower major surface, and
iv. A protective layer (5) covering at least a portion of the upper major surface of the roofing membrane (3), wherein the protective layer (5) is composed of porous material.

The invention is also related to a method for preparing a roof assembly having improved hail impact resistance and to use of a protective layer to improve hail impact resistance of a roof system.

## Description

### Technical field

The invention relates to the field of roof covering systems. In particular, the invention relates to roof systems and roof assemblies having improved resistance against mechanical impacts, particularly improved resistance against impact of hailstones.

### Background of the invention

Outer exterior surfaces of buildings have to be protected from environmental forces such as wind and rain. Roofing membranes composed of polymeric materials are used for waterproofing of flat or slightly sloped roofs whereas sloped roofs are typically covered with roof shingles. Low-slope roof assemblies are typically composed of a roofing membrane, a rigid insulation board, and a roof deck. The roofing membrane is typically applied directly on the top of the insulation board, which is used to improve the thermal insulation properties of the roof assembly. Alternatively, the roofing membrane can be secured to a cover board, which is applied on top of the insulation board. In ventilated and cold roof designs, the insulation board can also be located below the roof deck.

Roofing membranes used for waterproofing of flat and slightly-sloped roof structures can be provided as single-ply or multi-ply membrane systems. In a single-ply system, the roof substrate is covered using a roofing membrane composed of single waterproofing layer, which may further be reinforced with a reinforcement layer, such as a layer of fiber material. In multi-ply systems, roofing membranes composed of multiple waterproofing layers having same or different composition are used. Single-ply roofing membranes have the advantage of lower production costs compared to the multi-ply membranes, but they are also less resistant to mechanical damages cause by punctures of sharp objects.

Commonly used materials for roofing membranes include plastics, especially thermoplastics such as plasticized polyvinylchloride (p-PVC), thermoplastic polyolefin elastomers (TPO, TPE-O), and thermoset materials such as chemically crosslinked ethylene-propylene diene monomer (EPDM) rubber. Thermoplastic polyolefin elastomers are heterophasic polymer systems comprising a high crystallinity base polyolefin and a low-crystallinity or amorphous polyolefin modifier. Waterproofing membranes based on crosslinked EPDM are very flexible and resistant to weathering but joints formed between overlapped portions of adjacent membranes cannot be sealed by heat-welding due to the chemically crosslinked polymer structure. Membranes composed of TPO materials are heat-weldable and less expensive than EPDM-membranes, but they are also more rigid, which is can be a disadvantage in some applications.

The degree of damage caused by a hailstorm generally depends mainly on the size but also on the density and shape of individual hail stones. The resistance against hail impact depends on how well the building materials can absorb the kinetic energy of the hail stones without losing their integrity. Roof assemblies that have not been certified with a severe (class 1-SH) or very severe (class 1-VSH) hail resistance classification according to FM 4470 standard are known to have a relatively low resistance against the impact of hail stones. Furthermore, hailstorms may cause only minor damages on the roofing membrane, which are difficult to notice in the first place. Such minor damages can compromise or even destroy the integrity and thus the waterproofing ability of the roofing membrane resulting in leakage of water through the membrane and into the underlaying roof structure and eventually into the building. Finally, the roofing membrane may remain intact after hail impact, but this does not mean that the underlying structures of the roof assembly, such as the insulation layer, also remains intact. Therefore, using a puncture/impact-resistant membrane material may not be sufficient to protect a roof assembly against impact of hailstones.

There thus remains a need for a method for improving hail impact resistance of a roof assembly.

### Summary of the invention

The object of the present invention is to provide a roof assembly having improved hail impact resistance and a method for preparing such roof assembly.

The subject of the present invention is a roof assembly as defined in claim 1.

It was surprisingly found out that hail impact resistance of a low-slope roof assembly comprising a roof deck, a roof underlayment, and a roofing membrane can be effectively improved by using a protective layer composed of porous material that has been installed to cover the top surface of the roofing membrane.

One of the advantages of the present invention is that a damaged protective layer can be easily replaced with a new one without having to replace other components of the roof assembly.

Other subjects of the present invention are presented in other independent claims. Preferred aspects of the invention are presented in the dependent claims.

### Brief description of the Drawings

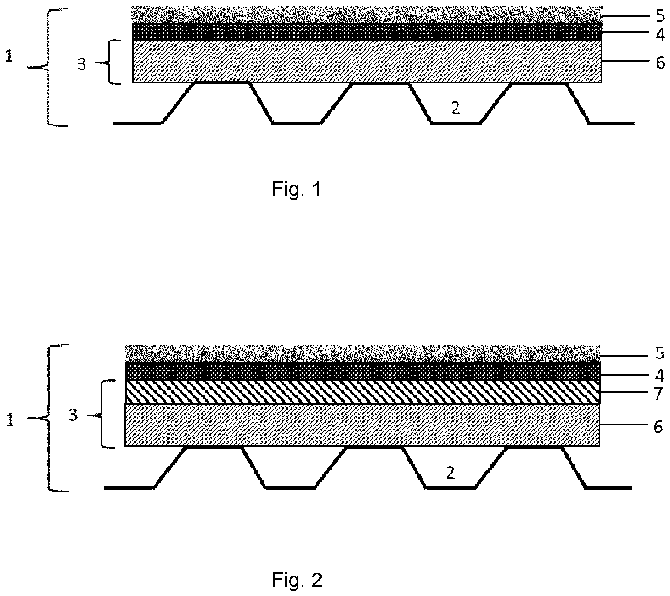

Fig. 1 shows a cross-section of a roof assembly (1) comprising a roof deck (2), a roof underlayment (3) a roofing membrane (4), and a protective layer (5) covering the upper major surface of the roofing membrane (4), wherein the roof underlayment (3) is composed of the an insulation board (6).
Fig. 2 shows a cross-section of a roof assembly (1) comprising a roof deck (2), a roof underlayment (3) a roofing membrane (4), and a protective layer (5) covering the upper major surface of the roofing membrane (4), wherein the a roof underlayment (3) is composed of an insulation board (6) and a cover board (7) placed on top of the insulation board (6).

### Detailed description of the invention

The subject of the present invention is a roof assembly (1) having improved hail impact resistance comprising:
i. A roof deck (2),
ii. A roof underlayment (3),
iii. A roofing membrane (4) having upper and lower major surfaces, and
iv. A protective layer (5) covering at least a portion of the upper major surface of the roofing membrane (4), wherein
the protective layer (5) is composed of porous material.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "elastomer" refers to any polymer or combination of polymers, which is capable of recovering from large deformations, and which can be, or already is, modified to a state in which it is essentially insoluble (but can swell) in a boiling solvent. Typical elastomers are capable of being elongated or deformed to at least 200% of their original dimension under an externally applied force, and will substantially resume the original dimensions, sustaining only small permanent set (typically no more than about 20%), after the external force is released. As used herein, the term "elastomer" may be used interchangeably with the term "rubber."

The term "molecular weight" refers to the molar mass (g/mol) of a molecule or a part of a molecule, also referred to as "moiety". The term "average molecular weight" can refer to weight or number or average molecular weight (Mₙ, M_{w}) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and, depending on the molecule, tetrahydrofurane as a solvent, at 35 °C, or 1,2,4-trichlorobenzene as a solvent, at 160 °C.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one thermoplastic polymer TP" refers to the sum of the individual amounts of all thermoplastic polymers TP contained in the composition. Furthermore, in case the composition comprises 20 wt.-% of at least one thermoplastic polymer, the sum of the amounts of all thermoplastic polymers contained in the composition equals 20 wt.-%.

The term "room temperature" designates a temperature of 23 °C.

The term "roof deck" refers in the present disclosure to a structural supporting surface of a building extending between the surrounding exterior walls of the building. A roof deck may be composed, for example, of plywood, metal or concrete.

The roofing membrane and the protective layer are preferably a sheet-like elements having upper and lower major surfaces and a thickness defined there between, wherein the sheet-like element preferably has a length and width at least 5 times, preferably at least 15 times, more preferably at least 25 times greater than the thickness of the sheet-like element.

The protective layer covering the upper major surface of the roofing membrane is composed of porous material. The term "porous material" refers in the present disclosure to any material that includes one or more of pores, cracks, and/or voids extending into the material from external surfaces thereof. Particularly, a porous material is permeable such that fluids are movable therethrough by way of pores or other passages contained in the material.

Preferably, the protective layer covers at least 50 %, more preferably at least 75 %, even more preferably at least 85 %, still more preferably at least 95 %, of the total area of the upper major surface of the roofing membrane.

Preferably, the protective layer is a polymeric layer, preferably having a mass per unit area of at least 1000 g/m², preferably at least 1500 g/m², more preferably at least 2000 g/m², even more preferably at least 2500 g/m². Such layers have been found out to be particularly suitable for protecting the roof assembly against hail impact. The term "polymeric layer" refers in the present disclosure to a layer comprising a continuous phase composed of one or more polymers.

According to one or more embodiments, the protective layer has a mass per unit area in the range of 1000 - 25000 g/m², preferably 1500 - 15000 g/m², more preferably 2500 - 10000 g/m², even more preferably 3000 - 7500 g/m². The mass per unit area of a layer can be determined by measuring the mass of test piece of the layer having a given area and dividing the measured mass by the area of the test piece.

The detailed composition of the protective layer is not particularly restricted. Any type of material which can provide sufficient protection against hail impact is suitable for use in the protective layer.

According to one or more embodiments, the protective layer comprises at least 25 wt.-%, preferably at least 50 wt.-%, based on the total weight of the protective layer, of at least one polymer **P1** selected from the group consisting of polyvinylchloride (PVC), polyolefins, halogenated polyolefins, rubbers, and ketone ethylene esters (KEE).

Suitable PVC resins for use as the at least one polymer **P1** include ones having a K-value determined by using the method as described in ISO 1628-2-1998 standard in the range of 50 - 85, preferably 65 - 75. The K-value is a measure of the polymerization grade of the PVC-resin and it is determined from the viscosity values of the PVC homopolymer as virgin resin, dissolved in cyclohexanone at 30° C.

Term "polyolefin" refers in the present disclosure to homopolymers and copolymers obtained by polymerization of olefins optionally with other types of comonomers. Suitable polyolefins for use as the at least one polymer **P1** include, for example, polyolefin-based thermoplastic elastomers, and thermoplastic polyolefins (TPO).

Particularly suitable polyolefins include propylene homopolymers, for example, isotactic polypropylene (iPP), syndiotactic polypropylene (sPP), and homopolymer polypropylene (hPP), and propylene copolymers, particularly propylene-α-olefin copolymers, ethylene copolymers, for example low density polyethylene (LDPE), linear low density polyethylene (LLDPE), and high density polyethylene (HDPE), and ethylene copolymers, particularly ethylene-α-olefin copolymers.

Further suitable polyolefins include heterophasic propylene copolymers. These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Suitable rubbers for use as the at least one polymer **P1** include, for example, styrene-butadiene rubber (SBR), ethylene propylene diene monomer (EPDM) rubber, butyl rubber, polyisoprene, polybutadiene, natural rubber, polychloroprene rubber, ethylene-propylene rubber (EPR), nitrile rubber, acrylic rubber, ethylene vinyl acetate rubber, and silicone rubber, and chemically crosslinked versions of the aforementioned rubbers.

According to one or more embodiments, the protective layer is a non-woven mat composed of a plurality of elongated strands of a polymer resin composition.

The elongated strands of the non-woven mat are preferably arranged in an irregular pattern of overlapping and interengaging strands, which are fused together at points of contact to form an integrated sheet structure.

According to one or more embodiments, the non-woven mat has been obtained by extruding a molten polymer resin composition though an extruder die to provide extruded strands, which are fused together and arranged into a sheet-like formation, wherein each of the extruded strands consists of the polymer resin composition.

The molten polymer resin composition has preferably been obtained by melt-processing a starting composition comprising the constituents of the polymer resin composition. The term "melt-processing" refers in the present disclosure to a process, in which at least one molten polymeric component is intimately mixed with at least one other component, which may be another molten polymeric component or a solid component, such as a filler or a foaming agent, until a melt blend, i.e. a substantially homogeneously mixed mixture of the polymeric component(s) and the other constituents is obtained.

The melt processing of the starting composition can be conducted as a batch process using any conventional mixer, such as a Brabender, Banbury, or roll mixer or as continuous process using a continuous type mixer, preferably an extruder, such as a single screw or a twin-screw extruder or a planetary roller extruder. The components of the starting composition can be fed to an extruder as individual streams, as a pre-mix, dry blend, master batch, or as granulates.

The cross-sectional shape of the elongated strands is not particularly restricted. The cross-section of the elongated strands can have a circular, elliptical, trilobal, or triangular shape, or a Y-shape, or a star shape, preferably a circular shape. The term "cross-section" refers in the present disclosure to a cross section of the elongated strands that has been cut into a plane perpendicular to the longitudinal direction of the strand.

According to one or more embodiments, the elongated strands have an equivalent diameter determined according to EN 14889-2:2006 standard in the range of 0.15 - 5.0 mm, preferably 0.5 - 3.5 mm, more preferably 0.75 - 2.5 mm, even more preferably 1 - 2 mm. Elongated strands having an equivalent diameter falling within the above cited ranges have been found out to be particularly suitable for providing non-woven mats with effective impact absorbing properties.

The thickness of the non-woven mat is preferably at least 1.5 mm, more preferably at least 2.5 mm, even more preferably at least 5 mm. According to one or more embodiments, the non-woven mat has a thickness in the range of 2.5 - 30 mm, preferably 5-20 mm, more preferably 7.5 - 15 mm.

According to one or more embodiments, the polymer resin composition comprises the at least one polymer **P1.**

According to one or more embodiments, the polymer resin composition of the elongated strands is a polyvinylchloride formulation, preferably a plasticized polyvinylchloride formulation, preferably comprising a polyvinylchloride resin, at least one plasticizer, and optionally at least one solid particulate filler.

According to one or more embodiments, the plasticized polyvinylchloride formulation comprises:
a1) 25 - 80 wt.-%, preferably 25 - 70 wt.-%, of a polyvinylchloride resin,
a2) 10 - 55 wt.-%, preferably 15-45 wt.-%, of at least one plasticizer, and
a3) 2.5 - 55 wt.-%, preferably 5 - 45wt.-%, of at least one inert mineral filler, all proportions being based on the total weight of the plasticized polyvinylchloride formulation.

Suitable plasticizers include but are not restricted to, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

According to one or more embodiments, the at least one plasticizer is selected from the group consisting of phthalates, trimellitate plasticizers, adipic polyesters, and biochemical plasticizers.

The term "inert mineral filler" designates in the present document mineral fillers, which, unlike mineral binders are not reactive with water, i.e. do not undergo a hydration reaction in the presence of water. Preferably the at least one inert mineral filler is selected from the group consisting of sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

The plasticized PVC-formulation can further comprise one or more additives, for example, UV- and heat stabilizers, UV-absorbers, antioxidants, flame retardants, dyes, pigments such as titanium dioxide and carbon black, matting agents, antistatic agents, impact modifiers, biocides, and processing aids such as lubricants, slip agents, antiblock agents, and denest aids.

According to one or more embodiments, the polymer resin composition of the elongated strands is a polyolefin formulation, preferably comprising:
b1) At least 65 wt.-%, preferably at least 75 wt.-%, of at least one polyolefin and
b2) 0.5 - 35 wt.-%, preferably 1 - 25 wt.-%, of at least one inert mineral filler, all proportions being based on the total weight of the polyolefin formulation.

According to one or more embodiments, the polymer resin composition is a foamed polymer resin composition, i.e. the elongated strands of the non-woven mat are composed of a foamed polymer resin composition.

Preferably, the foamed polymer resin composition has a closed cell foam structure. The term "closed cell foam structure" is understood to mean that the foamed polymer resin composition contains discrete, non-interconnected cells formed by the trapped pockets of gas. Preferably, at least 50 % of the pore volume of the foamed polymer resin composition is composed of discrete, non-interconnected cells formed by the trapped pockets of gas.

According to one or more embodiments, the foamed polymer resin composition has:
- A density of 0.86 - 0.96 g/cm³, preferably 0.88 - 0.96 g/cm³, more preferably 0.88- 0.92 g/cm³ and/or
- A cell diameter in the range of 10 - 350 µm, preferably 20 - 250 µm, more preferably 20 - 225 µm, even more preferably 50 - 200 µm.

According to one or more embodiments, the non-woven mat has been obtained by foam extruding a molten polymer composition through an extruder die to provide elongated strands, which are fused together and arranged into a sheet-like formation, wherein each of the elongated strands consists of a foamed polymer resin composition.

Preferably, the molten polymer composition has been obtained by melt-processing a starting composition comprising the constituents of the molten polymer composition, wherein the starting composition or the molten-polymer composition further comprises one or more physical and/or chemical blowing agents.

In case of a physical blowing agent is used in the foam extrusion, the blowing agent is preferably added to the starting composition or to the melt-processed starting composition before the molten polymer composition is extruded through the extruder die.

Suitable physical blowing agents include gaseous and liquid physical blowing agents. Gaseous physical blowing agents, such as compressed nitrogen or carbon dioxide, are can be directly injected under high pressure into the melt-processed starting composition, which is conveyed through a melt-processing apparatus, such as an extruder barrel. Liquid physical blowing agents include volatile liquids which produce gas through vaporization. Suitable liquid physical blowing agents generally include water, short- chain aliphatic hydrocarbons, for example having from five to seven carbon atoms, and their halogenated, particularly chlorinated and fluorinated, derivatives. Particularly suitable liquid physical blowing agents have a standard boiling point measured at a pressure of 1 bar of not more than 250 °C, preferably not more than 200 °C. The standard boiling point of a liquid physical blowing agent can be measured using an ebulliometer.

Chemical blowing agents, also known as chemical foaming agents, are typically solids that liberate gas(es) by means of a chemical reaction, such as decomposition, when exposed to elevated temperatures. Chemical blowing agents may be either inorganic or organic. In case a chemical blowing agent is used in the foam extrusion, the blowing agent is preferably added to the starting composition and the blowing gas is generated during the melt-processing of the starting composition.

According to one or more embodiments, the starting composition comprises at least one chemical blowing agent.

Suitable substances to be used as the at least one chemical blowing agent include, for example, azodicarbonamide, azobisisobutyronitrile, azocyclohexyl nitrile, dinitrosopentamethylene tetramine, azodiamino benzene, calcium azide, 4,4'-diphenyldisulphonyl azide, benzenesulphonyl hydrazide, 4,4-oxybenzenesulphonyl semicarbazide, 4,4-oxybis(benzenesulphonyl hydrazide), diphenyl sulphone-3,3-disulphonyl hydrazide, p-toluenesulphonyl hydrazide, p-toluenesulphonyl semicarbazide, trihydrazino triazine, N,N'-dimethyl-N,N'-dinitrosoterephthalamide, diazoaminobenzene, diazoaminotoluene, hydrazodicarbonamide, barium azodicarboxylate, 5-hydroxytetrazole, sodium bicarbonate, ammonium carbonate, ammonium bicarbonate, potassium bicarbonate, and organic acids.

According to one or more embodiments, the at least one chemical blowing agent is present in the starting composition in form of solid particles having a median particle size dso in the range of 0.5 - 100 µm, preferably 1.0 - 75 µm, more preferably 2.5 - 50 µm, even more preferably 5 - 35 µm.

The term "particle size" refers in the present disclosure to the area-equivalent spherical diameter of a particle (Xₐᵣₑₐ). The term "median particle size dso" refers to a particle size below which 50 % of all particles by volume are smaller than the dso value. The particle size distribution can be measured by laser diffraction according to the method as described in standard ISO 13320:2009. The particle size distribution can be measured using a wet or dry dispersion method and a Mastersizer 2000 device (trademark of Malvern Instruments Ltd, GB).

The amount of the at least one chemical blowing agent depends on the type of polymers contains in the starting composition, on the desired foaming degree, and on the type of the at least one chemical blowing agent.

According to one or more embodiments, the at least one chemical blowing agent comprises 0.05 - 7.5 wt.-%, preferably 0.1 - 5 wt.-%, more preferably 0.1 - 3.5 wt.-%, even more preferably 0.1 - 3 wt.-%, of the total weight of the starting composition.

According to one or more embodiments, the starting composition is a plasticized PVC formulation for foam extrusion comprising:
a) 20 - 80 wt.-%, preferably 25 - 70 wt.-%, of a PVC resin,
b) 10 - 55 wt.-%, preferably 15 - 45 wt.-%, of at least one plasticizer,
c) 2.5 - 55 wt.-%, preferably 5 - 45wt.-%, of at least one inert mineral filler,
d) 0.05 - 5 wt.-%, preferably 0.1 - 3 wt.-%, of at least one chemical blowing agent,
d) 0.25 - 10 wt.-%, preferably 0.5 - 5 wt.-%, of at least one stabilizer,
e) 0.25 - 10 wt.-%, preferably 0.5 - 5 wt.-%, of at least one nucleating agent, and
f) 0 - 15 wt.-%, preferably 0 - 10 wt.-%, of at least one acrylic polymer.

Details of a suitable process and equipment for the foam extrusion of a plasticized PVC formulation are disclosed, for example, in US2017/0306138 A1.

Suitable compounds for use in the plasticized PVC formulation for foam extrusion as the PVC resin, the at least one plasticizer, the at least one mineral filler, and the at least one chemical blowing agent have already been discussed above.

Examples of suitable stabilizers for use in the plasticized PVC formulation for foam extrusion include metal salts of carboxylic acids, especially tatty acids such as stearate, palmitates and laureates ("metallic soaps"), for example calcium stearate, organotin compounds, and mixed metal carboxylates, such as systems based on barium, zinc and calcium carboxylates, in particular Ba - Zn carboxylates and Ca - Zn carboxylates, for instance a mixture of barium and zinc stearate or a mixture of calcium stearate and zinc stearate. Mixed metal stabilizers are often used together with co-stabilizers.

The amount of the at least one stabilizer in the plasticized PVC formulation for foam extrusion may vary in wide ranges but is preferably from 0.5 to 5 wt.-%, more preferably from 1 to 3 wt.-%, even more preferably from 1.5 to 2.5 wt.-%.

Nucleating agents are substances which when added to polymers support generation of crystallization seeds in the polymer melt thus supporting formation of an increased number of crystals and accelerating crystallization process. A person skilled in this technical field is familiar with the use of nucleation agents. The plasticized PVC formulation foam extrusion may contain one or more nucleating agents.

Examples of suitable nucleating agents for use in the plasticized PVC formulation for foam extrusion include sheet silicates, fumed silica, carbon black, graphite, titanium dioxide, citric acid, quartz powder, talcum or a mixture of at least two of these nucleating agents. According to one or more embodiments, the at least one nucleating agent is talcum. Talcum is also called talc. Talcum is typically added as talcum powder, which is commercially available in different grades which are suitable for use in the plasticized PVC formulation for foam extrusion. The cell structure of the foam can be adjusted by the average particle size of the talcum used. Talcum with lower particle size results in a foam with smaller cells and higher cell density, which can be preferred. According to one or more embodiments, the at least one nucleating agent is talcum having a median particle size dso of not more than 50 µm, preferably not more than 35 µm, more preferably not more than 25 µm, even more preferably not more than 15 µm, still more preferably not more than 10 µm.

According to one or more embodiments, the plasticized PVC formulation for foam extrusion further comprises at least one acrylic polymer. The term "acrylic polymer" designates in the present disclosure homopolymers, copolymers and higher inter-polymers of an acrylic monomer with one or more further acrylic monomers and/or with one or more other ethylenically unsaturated monomers. The term "acrylic monomer" refers in the present disclosure to monomers having at least one (meth)acryloyl group in the molecule. The term "(meth)acryloyl" designates methacryloyl or acryloyl. Accordingly, "(meth)acrylic" designates methacrylic or acrylic. A (meth)acryloyl group is also known as (meth)acryl group.

The at least one acrylic polymer is preferably present, if used, in the plasticized PVC formulation for foam extrusion as a foaming aid to obtain improved melt strength. It is also possible that the plasticized PVC formulation for foam extrusion is free of acrylic polymers.

According to one or more embodiments, the at least one acrylic polymer comprises 0.05 - 15 wt.-%, preferably 0.15 - 10 wt.-%, more preferably 0.3 - 7.5 wt.-%, even more preferably 0.35 - 5 wt.-%, still more preferably 0.5 - 3 wt.-%, of the total weight plasticized PVC formulation for foam extrusion.

According to one or more embodiments, the at least one acrylic polymer is a polymethyl methacrylate (PMMA), preferably having a weight average molecular weight (M_{w}) of at least 500000 g/mol, more preferably at least 1500000 g/mol, even more preferably at least 4000000 g/mol. A weight average molecular weight (M_{w}) can be determined by gel permeation chromatography (GPC), preferably using polystyrene as a standard and styrene-divinylbenzene gel with porosity of 100 Angstrom, 1000 Angstrom and 10000 Angstrom as the column.

The plasticized PVC formulation for foam extrusion is preferably in form of a dry blend, granules, or pellets. The term "dry blend" refers to a homogeneous, dry powder with greater or lesser flowability. Such dry blends can be produced, for example, by heating the constituents of the plasticized PVC formulation for foam extrusion in a high-speed mixer to temperatures of about 100 to 120 °C. Granules and pellets can be produced by processing the constituents or a dry blend of the of the plasticized PVC formulation for foam extrusion in a compounding extruder.

According to one or more embodiments, the starting composition is a polyolefin formulation for foam extrusion comprising:
a') At least 65 wt.-%, preferably at least 75 wt.-%, of at least one polyolefin,
b') 0.05 - 5 wt.-%, preferably 0.1 - 3 wt.-%, of at least one chemical blowing agent, and
c') 0.5 - 35 wt.-%, preferably 1 - 25 wt.-%, of at least one inert mineral filler, all proportions being based on the total weight of the polyolefin formulation.

Suitable compounds for use in the polyolefin formulation for foam extrusion as the at least one polyolefin, the at least one mineral filler, and the at least one chemical blowing agent have already been discussed above.

The protective layer may be secured to the roofing membrane by using any conventional fastening means, such as by using spot welding, adhesive bonding, or mechanical fastening means. The protective layer can also be loosely laid without any attachment to the roofing membrane. The selection of suitable adhesive for use in bonding the protective layer to the roofing membrane depends on the detailed compositions of the protective layer and the roofing membrane. Suitable adhesives include, for example, reactive one- and two-component epoxy and polyurethane adhesives, water and solvent-based contact adhesives, and hot-melt adhesives. Suitable mechanical fastening means include, for example, screws and metal plates.

The roofing membrane and the protective layer are typically provided as pre-fabricated articles, which are delivered to the construction site in form of rolls, unwound, and cut to provide sheets having a suitable length. Adjacent sheets of the roofing membrane are typically overlapped along the short and long edges and the overlap seams are then be sealed by heat-welding or by using adhesive means. Adjacent sheets of the protective layer can also be overlapped or joined together without an overlap to form a butt joint. Furthermore, the adjacent sheets of the protective layer can be secured to each other by using suitable fastening means, such as by using adhesive bonding, heat welding, or mechanical fastening means, particularly hook and loop fasteners.

According to one or more embodiments, at least a portion of the adjacent sheets of the protective layer are secured to each other, preferably by using hook and loop fasteners.

The term "hook and loop fasteners" refers in the present disclosure to mechanical fastening devices comprising two portions, a first component, such as a hook component and a second component, such as a loop component, which first and second components are releasable interconnected when brought into contact with each other. A hook and loop fastener can be provided in a hook- and loop configuration or in a hook- and hook configuration. Suitable hook and loop fasteners are commercially available, for example, under the trade mark of Velcro^{®} Brand (from Velcro BVBA) and under the trade mark of 3M^{®} Hook and Loop Fastener (from 3M).

Preferably, the roofing membrane comprises a polymeric waterproofing layer.

According to one or more embodiments, the polymeric waterproofing layer comprises at least 25 wt.-%, preferably at least 50 wt.-%, based on the total weight of the polymeric waterproofing layer, of at least one polymer **P2** selected from the group consisting of polyvinylchloride (PVC), polyolefins, halogenated polyolefins, rubbers, and ketone ethylene esters (KEE).

Suitable polymers for use as the at least one polymer **P2** include the ones presented above as suitable for use as the at least one polymer **P1**.

According to one or more embodiments, the polymeric waterproofing layer further comprises at least one flame retardant **FR.**

The at least one flame retardant **FR** is preferably selected from the group consisting of magnesium hydroxide, aluminum trihydroxide, antimony trioxide, ammonium polyphosphate, and melamine-, melamine resin-, melamine derivative-, melamine-formaldehyde-, silane-, siloxane-, and polystyrene-coated ammonium polyphosphates.

Other suitable flame retardants for use as the at least one flame retardant **FR** include, for example, 1,3,5-triazine compounds, such as melamine, melam, melem, melon, ammeline, ammelide, 2-ureidomelamine, acetoguanamine, benzoguanamine, diaminophenyltriazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethylisocyanaurate, 1,3,5-triglycidylisocyanaurate, triallylisocyanurate and derivatives of the aforementioned compounds.

Suitable flame retardants are commercially available, for example, under the trade names of Martinal^{®} and Magnifin^{®} (both from Albemarle) and under the trade names of Exolit^{®} (from Clariant), Phos-Check^{®} (from Phos-Check) and FR CROS^{®} (from Budenheim).

Preferred amount of the at least one flame retardant FR depends on the type of the polymeric waterproofing layer, particular on the type of the at least one polymer **P2.** In case of a PVC-based roofing membrane, the amount of the at least one flame retardant **FR** is relatively low, such as in the range of 0.1 - 10 wt.-%, preferably 0.5 - 5 wt.-%, based on the total weight of the polymeric waterproofing layer. On the other hand, in case of a polyolefin-based roofing membrane, the amount of the at least one flame retardant can be much higher, such as in the range of 5 - 60 wt.-%, preferably 10 - 50 wt.-%, based on the total weight of the polymeric waterproofing layer.

The polymeric waterproofing layer can comprise, in addition to the at least one polymer **P2** and the at least one flame retardant **FR,** auxiliary components, for example, UV- and heat stabilizers, antioxidants, plasticizers, fillers, dyes, pigments such as titanium dioxide and carbon black, matting agents, antistatic agents, impact modifiers, biocides, and processing aids such as lubricants, slip agents, antiblock agents, and denest aids. The total amount of these auxiliary components is preferably not more than 55 wt.-%, more preferably not more than 45 wt.-%, even more preferably not more than 40 wt.-%, based on the total weight of the polymeric waterproofing layer.

The thickness of the polymeric waterproofing layer is not particularly restricted, and it also depends on whether the roofing membrane is a single-ply or a multi-ply roofing membrane. The term "single-ply roofing membrane" designates in the present disclosure roofing membranes comprising one single waterproofing layer whereas the term "multi-ply roofing membrane refers to membranes comprising more than one waterproofing layers having similar or different compositions. Single-ply and multi-ply waterproofing membranes are known to a person skilled in the art and they may be produced by any conventional means, such as by way of extrusion or co-extrusion through a conventional extrusion die, calendaring or by spread coating.

Preferably, the polymeric waterproofing membrane has a thickness of not more than 15 mm, more preferably not more than 10 mm, even more preferably not more than 5 mm. According to one or more embodiments, the polymeric waterproofing membrane has a thickness of in the range of 0.1 - 5 mm, preferably 0.35 - 3.5 mm, more preferably 0.5 - 3.0 mm.

According to one or more embodiments, the roofing membrane is a single-ply roofing membrane comprising one single polymeric waterproofing layer. In these embodiments, the upper major surface of the polymeric waterproofing layer forms the upper major surface of the roofing membrane and the lower major surface of the polymeric waterproofing layer forms the lower major surface of the roofing membrane.

The roofing membrane may further comprise a reinforcement layer, which is preferably at least partially embedded into the polymeric waterproofing layer or adhered to least a portion of the lower major surface of the roofing membrane on the side opposite to the side of the protective layer. By the expression "fully embedded" is meant that the reinforcement layer is fully covered by the matrix of the polymeric waterproofing layer.

The type of the reinforcement layer, if used, is not particularly restricted. For example, the reinforcement layers commonly used for improving the dimensional stability of thermoplastic roofing membranes can be used. Preferred reinforcement layers comprise at least one layer of fiber material.

The term "fiber material" designates in the present document materials composed of fibers comprising or consisting of, for example, organic, inorganic or synthetic organic materials. Examples of organic fibers include, for example, cellulose fibers, cotton fibers, and protein fibers. Particularly suitable synthetic organic materials include, for example, polyester, homopolymers and copolymers of ethylene and/or propylene, viscose, nylon, and polyamides. Fiber materials composed of inorganic fibers are also suitable, in particular, those composed of metal fibers or mineral fibers, such as glass fibers, aramid fibers, wollastonite fibers, and carbon fibers. Inorganic fibers, which have been surface treated, for example, with silanes, may also be suitable. The fiber material can comprise short fibers, long fibers, spun fibers (yarns), or filaments. The fibers can be aligned or drawn fibers. It may also be advantageous that the fiber material is composed of different types of fibers, both in terms of geometry and composition.

Preferably, the reinforcement layer is selected from the group consisting of non-woven fabrics, woven fabrics, and laid scrims.

The term "non-woven fabric" designates in the present disclosure materials composed of fibers, which are bonded together by using chemical, mechanical, or thermal bonding means, and which are neither woven nor knitted. Non-woven fabrics can be produced, for example, by using a carding or needle punching process, in in which the fibers are mechanically entangled to obtain the non-woven fiber web or by using a spun bonding process. In chemical bonding, chemical binders such as adhesive materials are used to hold the fibers together in a non-woven fiber web.

The term "laid scrim" refers in the present disclosure web-like non-woven products composed of at least two sets of parallel yarns (also designated as weft and warp yarns), which lay on top of each other and are chemically bonded to each other. The yarns of a non-woven scrim are typically arranged with an angle of 60 - 120°, such as 90 ± 5°, towards each other thereby forming interstices, wherein the interstices occupy more than 60% of the entire surface area of the laid scrim. Typical materials for laid scrims include metal fibers, inorganic fibers, in particular glass fibers, and synthetic organic fibers, in particular polyester, polypropylene, polyethylene, and polyethylene terephthalate (PET).

According to one or more embodiments, the reinforcement layer is a non-woven fabric composed of synthetic organic fibers or inorganic fibers, wherein the synthetic organic fibers are preferably selected from the group consisting of polyester fibers, polypropylene fibers, polyethylene fibers, nylon fibers, and polyamide fibers and wherein the inorganic fibers are selected from the group consisting of glass fibers, aramid fibers, wollastonite fibers, and carbon fibers and wherein the non-woven fabric preferably has a mass per unit weight of not more than 350 g/m², more preferably not more than 300 g/m², even more preferably not more than 250 g/m², such as in the range of 10 - 300 g/m², preferably 15 - 250 g/m². The mass per unit area of a non-woven fabric can be determined by measuring the mass of test piece of the non-woven fabric having a given area and dividing the measured mass by the area of the test piece. Preferably, the mass per unit area of a non-woven fabric is determined as defined in ISO 9073-18:2007 standard.

According to one or more further embodiments, the reinforcement layer is a laid scrim, preferably composed of synthetic organic fibers or glass fibers, wherein the synthetic organic fibers are preferably selected from the group consisting of polyester fibers, polypropylene fibers, polyethylene fibers, and polyethylene terephthalate (PET) fibers, more preferably polyester fibers and wherein the laid scrim preferably has a mass per unit weight of not more than 350 g/m², more preferably not more than 300 g/m², even more preferably not more than 250 g/m², such as in the range of 10 - 300 g/m², preferably 15 - 250 g/m².

It can be advantageous that the roofing membrane further comprises a top-coating covering at least portion of the upper major surface of the polymeric waterproofing layer. The top-coating may comprise UV-absorbers and/or thermal stabilizers to protect the polymeric waterproofing layer from damaging influence of sunlight. The top-coating may also comprise color pigments in order to provide the polymeric waterproofing layer with a desired color.

According to one or more embodiments, the roofing membrane comprises a second polymeric waterproofing layer, wherein the polymeric waterproofing layer and the second polymeric waterproofing layer are directly connected to each other over at least a portion of their opposing major surfaces. The expression "directly connected" is understood to mean in the context of the present invention that no further layer or substance is present between the layers, and that the opposing surfaces of the two layers are directly connected to each other or adhere to each other. In these embodiments, the upper major surface of the polymeric waterproofing layer forms the upper major surface of the roofing membrane and the lower major surface of the second waterproofing layer forms the lower major surface of the roofing membrane.

It may furthermore be preferred that the roofing membrane shows an impact resistance measured according to EN 12691: 2005 standard in the range of 200 - 1500 mm and/or a longitudinal and a transversal tensile strength measured at a temperature of 23 °C according to DIN ISO 527-3 standard of at least 5 MPa and/or a longitudinal and transversal elongation at break measured at a temperature of 23 °C according to DIN ISO 527-3 standard of at least 300 % and/or a water resistance measured according to EN 1928 B standard of 0.6 bar for 24 hours and/or a maximum tear strength measured according to EN 12310-2 standard of at least 100 N.

The roof assembly of the present invention further comprises a roof underlayment. Preferably, the roof underlayment comprises a cover board and/or an insulation board.

Preferably, the insulation board comprises at least one foam panel having a closed cell structure. Suitable foam panels having a closed cell structure include molded expanded polystyrene (EPS) foam panels, extruded expanded polystyrene (XPS) foam panels, polyurethane foam panels (PUR), and polyisocyanurate (PIR) foam panels.

The thickness of the insulation board is not particularly restricted. It may be preferable that the insulation board has a thickness determined by using the measurement method as defined in DIN EN 1849-2 standard of 5 - 500 mm, preferably 10 - 350 mm, even more preferably 25 - 150 mm.

According to one or more embodiments, the insulation board comprises at least one foam panel having a closed cell structure selected from the group consisting of molded expanded polystyrene (EPS) foam panel, extruded expanded polystyrene (XPS) foam panel, polyurethane foam panel (PUR), and polyisocyanurate (PIR) foam panel, preferably having a density in the range of 10-150 g/l, more preferably 15 - 100 g/l, even more preferably 25-75 g/l.

The insulation board can be secured to the roof deck by using any suitable fastening means, such as by using adhesive bonding or mechanical fastening means.

According to one or more embodiments, the roof assembly further comprises a cover board.

Suitable cover boards for use in the roof assembly include, for example, gypsum boards, fiber-reinforce gypsum boards, wood fiber boards, cementitious boards, high-density (compressed) polyisocyanurate boards, perlite boards, asphaltic boards, mineral fiber boards, and plywood or oriented strand boards. The cover board may be used in addition of instead of the insulation board.

According to one or more embodiments, the roof underlayment comprises the insulation board and the cover board, wherein the cover board is positioned between the roofing membrane and the insulation board. The cover board can be secured to the insulation board by using any suitable fastening means, such as by using adhesive bonding or mechanical fastening means.

According to or more embodiments, the roof assembly further comprises a vapor control layer arranged between the roof deck and the roof underlayment.

The vapor control layer is liquid impermeable but at least partially permeable to moisture vapor. According to one or more embodiments, the vapor control layer has a water vapor diffusion equivalent air layer thickness value (Sd-value) measured according to the method as defined in ISO 1931 standard of not more than 100 m, preferably not more than 50 m.

According to one or more further embodiments, the vapor control layer has a moisture variable diffusion resistance. In these embodiments, the vapor control layer has a lower water vapor diffusion resistance at higher relative humidity of the surroundings and higher water vapor diffusion resistance at lower relative humidity of the surroundings. For example, the Sd-value of the vapor control layer can be in the range of 0.5 - 20 m, preferably 1 - 10 m at relative humidity of 80 %, and in the range of 25 - 100 m, preferably 35 - 65 m at relative humidity of 20 %.

The composition of the vapor control layer is not particularly restricted. Preferably, the vapor control layer comprises at least polymer selected from the group consisting of polyethylene (PE), polypropylene (PP), ethylene - vinyl acetate copolymers (EVA), ethylene - α-olefin co-polymers, ethylene - propylene co-polymers, polyvinylchloride (PVC), ethylene acrylic acid co-polymers, polyurethane, polyesters, co-polyesters, polyether-esters, polystyrene (PS), polyethylene terephthalate (PET), polyamides (PA), copolyamides, and ionomers. The term "ionomer" refers to a polymer that comprises ionic groups that are carboxylate salts, for example, ammonium carboxylates, alkali metal carboxylates, alkaline earth carboxylates, transition metal carboxylates and/or combinations of such carboxylates. Such polymers are generally produced by partially or fully neutralizing the carboxylic acid groups of precursor or parent polymers that are acid copolymers, for example, by reaction with a base.

Preferably, the vapor control layer has a thickness of 5 - 500 µm, more preferably 25 - 350 µm, even more preferably 50 - 250 µm and/or a mass per unit are of 25 - 500 g/m², more preferably 50 - 350 g/m², even more preferably 75 - 250 g/m².

The vapor control layer can be secured to the roof deck by using any suitable fastening means, such as by using adhesive bonding means or hook and loop fasteners.

The preferences given above for the roof deck, the vapor control layer, the roof underlayment, the insulation board, the cover board, the roofing membrane, and to the protective layer apply equally apply equally to all subjects of the present invention unless otherwise stated.

Another subject of the present invention is a method for providing a roof assembly having improved hail impact resistance, the method comprising steps of:
I) Providing a roof assembly (1) comprising a roof deck (2), a roof underlayment (3), and a roofing membrane (4) having upper and lower major surfaces,
II) Providing one or more sheets of a protective layer (5),
III) Covering at least a portion of the upper major surface of the roofing membrane (4) with said sheet(s), wherein
the protective layer (5) is composed of porous material.

Preferably, at least 50 %, more preferably at least 75 %, even more preferably at least 85 %, still more preferably at least 95 %, of the total area of the upper major surface of the roofing membrane is covered with said sheet(s) of the protective layer.

Preferably, the protective layer is a polymeric layer, preferably having a mass per unit area of at least 1000 g/m², more preferably at least 1500 g/m², even more preferably at least 2000 g/m², still more preferably at least 2500 g/m².

According to one or more embodiments, the protective layer has a mass per unit area in the range of 1000 - 25000 g/m², preferably 1500 - 15000 g/m², more preferably 2500 - 10000 g/m², even more preferably 3000 - 8500 g/m².

According to one or more embodiments, the protective layer is a non-woven mat composed of a plurality of elongated strands of a polymer resin composition.

Preferred embodiments of the roof underlayment, roofing membrane, and the protective layer have already been described above in the context of the roof assembly of the present invention.

The roof assembly provided in step I) of the method can be an existing roof assembly (without the protective layer) or step I) can comprise steps of:
I') Providing a roof underlayment and securing the roof underlayment to the roof deck and
II') Providing a roofing membrane and securing the roofing membrane to the roof underlayment.

The roof underlayment can be secured to the roof deck and the roofing membrane can be secured to the roof underlayment by using any suitable fastening means, such as by using adhesive bonding or mechanical fastening means, such as hook and loop fasteners.

According to one or more embodiments, the method comprises a further step of:
IV) Securing the sheet(s) of the protective layer to the upper major surface of the roofing membrane.

The sheet(s) of the protective layer can be secured to the roofing membrane by using any conventional fastening means, such as by using spot welding, adhesive bonding, or mechanical fastening means. The selection of suitable adhesive for use in bonding the protective layer to the roofing membrane depends on the detailed compositions of the protective layer and the roofing membrane. Suitable adhesives include, for example, reactive one- and two-component epoxy and polyurethane adhesives, water and solvent-based contact adhesives, and hot-melt adhesives. Suitable mechanical fastening means include, for example, screws and metal plates and hook and loop fasteners.

In case more than one sheet of the protective layer is used for covering the upper major surface of the roofing membrane, the adjacent sheets of the protective layer can be overlapped or joined together without an overlap to form a butt joint. Furthermore, the adjacent sheets of the protective layer can be secured to each other by using any suitable fastening means, such as by using heat-welding, adhesive bonding, or by mechanical fastening means, particularly by using hook and loop fasteners.

According to one or more embodiments, the method comprises a further step of:
V) Securing at least a portion of adjacent sheets of the protective layer to each other, preferably by using heat-welding, adhesive bonding, or mechanical fastening means, more preferably by using hook and loop fasteners.

The protective layer is typically provided as a pre-fabricated article, which is delivered to the construction site in form of a roll, unwound and cut to provide sheets having a suitable length.

According to one or more embodiments, step II) of the method comprises providing the protective layer in form of a roll, unwinding the roll, and cutting the protective layer into sheet(s) having a suitable length.

According to one or more embodiments, said sheet(s) of the protective layer have a width in the range of 0.5 - 5 m, preferably 1 - 4 m, more preferably 1.5 - 3.5 m, even more preferably 1.5 - 3 m and/or a length in the range of 1 - 20 m, preferably 1.5 - 15 m, more preferably 2 - 10 m. The term "width" and "length" refer to the two perpendicular dimensions measured in the horizontal plane of the upper and lower major surfaces of a sheet-like element. Generally, the "width" of a sheet-like element is the smaller of the horizontal dimensions. Consequently, the "width" of a sheet of the protective layer refers to the minor dimension measured in the horizontal plane of the sheet in a direction perpendicular to the length of the sheet.

Still another subject of the present invention is use of a protective layer to improve hail impact resistance of a roof system comprising a roof underlayment and a roofing membrane, wherein the protective layer is composed of porous material.

Preferably, the protective layer is arranged to cover at least a portion of an upper major surface of the roofing membrane facing away from the roof underlayment.

Preferably, the protective layer is a polymeric layer, preferably having a mass per unit area of at least 1000 g/m², preferably at least 1500 g/m², more preferably at least 2000 g/m², even more preferably at least 2500 g/m².

According to one or more embodiments, the protective layer has a mass per unit area in the range of 1000 - 25000 g/m², preferably 1500 - 15000 g/m², more preferably 2500 - 10000 g/m², even more preferably 3000 - 8500 g/m².

According to one or more embodiments, the protective layer is a non-woven mat composed of a plurality of elongated strands of a polymer resin composition.

Preferred embodiments of the roof underlayment, roofing membrane, and the protective layer have already been described above in the context of the roof assembly of the present invention.

According to one or more embodiments, the protective layer is secured to the roofing membrane, preferably by using spot welding, adhesive bonding, or mechanical fastening means or loosely laid without any attachment to the roofing membrane.

### Examples

The following materials as presented in Table 1 were used in the Examples.

**Table 1**

| | | |
|---|---|---|
| **G410-80** | Sarnafil^{®} G410-20 EnergySmart | Sika Corporation |
| **S327-20** | Sarnafil^{®} S327-20 EnergySmart | Sika Corporation |
| PW | Ground contact pressure plywood cover board, thickness 12.7 mm | |
| HD | H-Shield^{®} HD, high-density polyisocyanurate cover board, thickness 12.7 mm | Hunter Panels |
| ISO | H-Shield^{®}, polyisocyanurate insulation panel, thickness 38.1 mm | Hunter Panels |
| PVC TNN | Sika Tuff N Nuff^{®} rock shield, thickness 9.52 mm | Sika Corporation |
| Walkway | Floorline^{®}, PVC-based open grid mat, thickness 6 mm | Plastex Matting Inc. |

### Hail impact resistance

The hail impact resistance of reference (without protective layer) and inventive (with protection layer) roof assemblies were tested according to the following procedure.

The roof assemblies having the structures as shown in Table 2 were shot with round ice balls having a diameter of ca. 2 inches (50.8 mm) and a speed of ca. 45-50 m/s. The roof assemblies were built into a climatized chamber (fridge) to simulate the conditions in during a hail storm. The temperature of the climatized chamber was decreased until the surface of the roofing membrane reached a value of 40 °F (4.4 °C) or below. The ice balls were then shot against the outer surface of the roofing membrane.

In case the roofing membrane survived the impact of the ice ball without showing any loss of material integrity, the "damages to the membrane" was evaluated as "pass".

The damage to the cover board and the insulation board was evaluated by measuring the depth of the depression in the substrate caused by the impact of the ice ball. In case the roof assembly did not contain a cover board or an insulation board, the depth of depression in the respective substrate was marked as "not analyzed" (N/A).

**Table 2**

| | **Ref-1** | **Ex-1** | **Ex-2** | **Ex-3** |
|---|---|---|---|---|
| Protective layer | None | PVC TNN | PCV TNN | Walkway pad |
| Roof assembly | G410-20/PW/ISO | PVC TNN/G410-20/PW/PW | PVC TNN/G410-20/PW/ISO | Walkway/G410-20/PW/ISO |
| Impact energy [J] | 84.7 | 84.7 | 93.6 | 84.7 |
| Damages to membrane | Pass | Pass | Pass | Pass |
| Depression depth coverboard [mm] | 0.8 | 0.0 | 0.0 | 0.9 |
| Depression depth insulation board [mm] | Damaged | N/A | No damage | No damage |

**Table 3**

| | **Ref-2** | **Ex-4** | **Ref-3** | **Ex-5** |
|---|---|---|---|---|
| Protective layer | None | PVC TNN | None | PVC TNN |
| Roof assembly | G410-20ISO | PVC TNN/G410-20/ISO | G410-20/HD | PVC TNN/G410-20/HD |
| Impact energy [J] | 88.1 | 88.1 | 88.1 | 88.1 |
| Damages to membrane | Fail | Pass | Fail | Pass |
| Depression depth coverboard [mm] | N/A | N/A | 6.9 | 2.6 |
| Depression depth insulation board [mm] | 8.6 | 3.5 | N/A | N/A |

**Table 4**

| | **Ref-4** | **Ex-6** | **Ref-5** | **Ex-7** |
|---|---|---|---|---|
| Protective layer | None | PVC TNN | None | PVC TNN |
| Roof assembly | S327-20/PW/ISO | PVC TNN/S327-20/PW/ISO | S327-20/ISO | PVC TNN/S327-20/ISO |
| Impact energy [J] | 74.6 | 74.6 | 61.0 | 74.6 |
| Damages to membrane | Pass | Pass | Pass | Pass |
| Depression depth coverboard [mm] | 1.6 | 0.4 | N/A | N/A |
| Depression depth insulation board [mm] | Damaged | No damage | 5.1 | 2.5 |

## Claims

1. A roof assembly (1) having improved hail impact resistance comprising:
i. A roof deck (2),
ii. A roof underlayment (3),
iii. A roofing membrane (4) having an upper and a lower major surface, and
iv. A protective layer (5) covering at least a portion of the upper major surface of the roofing membrane (3),
wherein the protective layer (5) is composed of porous material.

2. The roof assembly (1) according to claim 1, wherein the protective layer (5) is a polymeric layer having a mass per unit area of at least 1000 g/m², preferably at least 1500 g/m².

3. The roof assembly (1) according to claim 1 or 2, wherein the protective layer (5) comprises at least 25 wt.-%, preferably at least 50 wt.-%, based on the total weight of the protective layer, of at least one polymer **P1** selected from the group consisting of polyvinylchloride (PVC), polyolefins, halogenated polyolefins, rubbers, and ketone ethylene esters (KEE).

4. The roof assembly (1) according to any one of previous claims, wherein the protective layer (5) is a non-woven mat composed of a plurality of elongated strands of a polymer resin composition.

5. The roof assembly (1) according to claim 4, wherein the non-woven mat has been obtained by extruding a molten polymer resin composition though an extruder die to provide extruded strands, which are fused together and arranged into a sheet-like formation, wherein each of the extruded strands consists of the polymer resin composition.

6. The roof assembly (1) according to claim 4 or 5, wherein the elongated strands of the non-woven mat have an equivalent diameter determined according to EN 14889-2:2006 standard in the range of 0.15 - 5.0 mm, preferably 0.5 - 3.5 mm.

7. The roof assembly (1) according to any one of claims 4-6, wherein the polymer resin composition is a polyvinylchloride formulation, preferably a plasticized polyvinylchloride formulation.

8. The roof assembly (1) according to any one of claims 4-7, wherein the polymer resin composition is a foamed polymer resin composition.

9. The roof assembly (1) according to any one of previous claims, wherein the roofing membrane (4) comprises a polymeric waterproofing layer, preferably comprising at least 25 wt.-%, more preferably at least 50 wt.-%, based on the total weight of the polymeric waterproofing layer, of at least one polymer **P2** selected from the group consisting of polyvinylchloride (PVC), polyolefins, halogenated polyolefins, rubbers, and ketone ethylene esters (KEE).

10. The roof assembly (1) according to any one of previous claims, wherein the roof underlayment (3) comprises a cover board (6) and/or an insulation board (7).

11. A method for providing a roof assembly having improved hail impact resistance, the method comprising steps of:
I) Providing a roof assembly (1) comprising a roof deck (2), a roof underlayment (3), and a roofing membrane (4) having upper and lower major surfaces,
II) Providing one or more sheets of a protective layer (5),
III) Covering at least a portion of the upper major surface of the roofing membrane (4) with said sheet(s), wherein
the protective layer (5) is composed of porous material.

12. The method according to claim 11, wherein the protective layer (5) is a polymeric layer having a mass per unit area of at least 1000 g/m², preferably at least 1500 g/m².

13. The method according to claim 11 or 12, wherein the protective layer (5) is a non-woven mat composed of a plurality of elongated strands of a polymer resin composition.

14. The method according to any one of claims 11-13 comprising a further step of:
IV) Securing said sheet(s) of the protective layer (5) to the upper major surface of the roofing membrane (4), preferably by using spot welding, adhesive bonding, or mechanical fastening means.

15. The method according to any one of claims 11-14 comprising a further step of:
V) Securing at least a portion of adjacent sheets of the protective layer (5) to each other, preferably by using heat-welding, adhesive bonding, or mechanical fastening means, more preferably by using hook and loop fasteners.

16. Use of a protective layer to improve hail impact resistance of a roof system comprising a roof underlayment and a roofing membrane, wherein the protective layer is arranged to cover at least a portion of an upper major surface of the roofing membrane facing away from the roof underlayment and wherein the protective layer is composed of porous material.

17. The use according to claim 16, wherein the protective layer is a polymeric layer having a mass per unit area of at least 1000 g/m², preferably at least 1500 g/m².

18. The use according to of claim 16 or 17, wherein the protective layer is a non-woven mat composed of a plurality of elongated strands of a polymer resin composition.
